# EUROPÄISCHE PATENTSCHRIFT

(11) **EP 3 593 310 B1**
(45) Veröffentlichungstag und Bekanntmachung des Hinweises auf die Patenterteilung: **09.08.2023**
(21) Anmeldenummer: 18719750.4
(22) Anmeldetag: 05.03.2018
(51) Int. Cl.: G06Q 20/34

(54) **CARD DEVICE MIT APPLETS UND WEITERGABE VON APDUS AN APPLETS**
CARD DEVICE HAVING APPLETS AND TRANSFER OF APDUS TO APPLETS
CARTE À PUCE COMPRENANT DES APPLETS ET TRANSFERT DE COMMANDES APDU AUX APPLETS

(30) Priorität: 06.03.2017 DE 102017002151
(43) Veröffentlichungstag der Anmeldung: 15.01.2020
(73) Patentinhaber: Giesecke+Devrient Mobile Security GmbH, 81677 München (DE)
(72) Erfinder: GIBIS, Oliver, 81825 München (DE)
(74) Vertreter: Giesecke + Devrient IP
(86) Internationale Anmeldenummer: PCT/EP2018/000086
(87) Internationale Veröffentlichungsnummer: WO 2018/162117

(56) Entgegenhaltungen:
- EP-A1- 1 939 822
- US-A1- 2014 188 713
- US-A1- 2015 127 529
- US-A1- 2015 288 686
- Sun Microsystems Inc: "Java Card 2.2 Virtual Machine Specification", , 1. Juni 2002 (2002-06-01), Seiten 1-302, XP055256973, Sun Microsystems Inc, Palo Alto, CA 94303 USA Gefunden im Internet: URL:https://www.informatik.uni-augsburg.de /lehrstuehle/swt/se/teaching/fruehere_seme ster/ws0708/javacard/Dokumentation/JcvmSpe c.pdf [gefunden am 2016-03-09]
- Globalplatform Inc.: "GlobalPlatform Card Specification Version 2.2.1", , 31. Januar 2011 (2011-01-31), XP055294367, Gefunden im Internet: URL:http://www.globalplatform.org/specific ationdownload.asp?id=7512 [gefunden am 2016-08-09] in der Anmeldung erwähnt

## Beschreibung

### Gebiet der Erfindung

Die Erfindung betrifft ein ressourcenbeschränktes Card Device, insbesondere ein auf der Java Card Technologie oder der native Technologie basierendes Card Device, insbesondere eine Chipkarte, ein Chipkartenmodul, oder ein Chipkartenmodul in einem Gehäuse beliebigen Formfaktors, oder eine in einem mobilen Endgerät eingerichtete virtuelle Chipkarte. Das Card Device kann insbesondere mit Funktionalität einer Zahlungsverkehrskarte oder mit einer SIM-Funktionalität (SIM = Subscriber Identity Module für Mobilfunk) ausgestattet sein. Applets im Card Device sind mit Kommandos, beispielsweise APDUs, adressierbar.

### Stand der Technik

Ein ressourcenbeschränktes Card Device umfasst einen Mikroprozessor mit einem darauf implementierten Betriebssystem (OS) (z.B. Java Card OS oder native OS) und einen Applet-Speicher zum Implementieren von Applets. Durch im Card Device implementierte Applets werden Funktionalitäten des Card Device erzielt. Beispielsweise sind in einem Card Device mit Funktionalität einer Zahlungsverkehrskarte ein oder mehrere Zahlungsverkehrs-Applets implementiert. Zahlungsverkehrskarten sind in Kartenformat, beispielsweise ID1, und als virtuelle Zahlungsverkehrskarten, die als Applikationen in einem Mobiltelefon implementiert sind. Für ein Card Device mit SIM-Funktionalität (SIM = Subscriber Identity Module) zur Nutzung eines mobilfunkfähigen Endgeräts in einem Mobilfunknetz sind im Card Device ein oder mehrere SIM-spezifische Applets implementiert.

Das Laden eines Applets in ein Card Device mittels APDU Kommandos ist spezifiziert im Dokument [1] Global Card Platform Specification V2.2.1, 2011, nachfolgend auch mit der offiziellen Kurzreferenz GPC_SPE_034 bezeichnet. Gemäß [1] GPC_SPE_034, Kapitel 9, speziell Kapitel 9.3, wird ein Applet in einem Card Device installiert, indem mit einem/mehreren LOAD Kommando(s) (9.3.2) ein Ladepaketes für das Applet in das Card Device lädt, und mit einem INSTALL Kommando (9.3.3 ff.) mit dem Inhalt des Ladepaketes eine Instanz des Applets im Card Device installiert. Gemäß [1] GPC_SPE_034 Kap. 9.3.6, Seite 84, wird beim Installieren der Applet-Instanz mittels des INSTALL Kommandos insbesondere mit einem INSTALL FOR INSTALL sichergestellt, dass der Applet Identifier AID des Applets in die Registry des Java Card Device gespeichert wird. Dieser Sachverhalt ist in Fig. 9-2 (Seite 92) durch den Eintrag "install and register Application" dargestellt. Gemäß [1] GPC_SPE_034, Kap. 11 ist der Aufbau des INSTALL APDU Kommandos beschrieben. Gemäß Unterkapitel 11.5.2.3.2, Tabelle 11-43, wird der Application AID eines zu installierenden Applets im Datenfeld des INSTALL Kommandos übergeben, und zwar im Teilfeld "Application AID".

Gemäß [1] GPC_SPE_034 hat somit jedes zu installierende Applet genau einen Application Identifier (AID). Weiter werden der AID und die Applet-Instanz aus ein und demselben Ladepaket in das Card Device installiert. Später, beim Ansprechen der Applet-Instanz, kann die Applet-Instanz nur mit dem AID aus demselben Ladepaket adressiert werden. Soll es möglich sein, ein Applet mit unterschiedlichen AIDs aufzurufen, muss für jeden der unterschiedlichen AIDs eine separate Instanz des Applets von diesem Ladepaket erzeugt werden und somit werden weitere, separate Applet-Instanzen im Card Device angelegt.

Global Platform kennt den Shareable Interface Mechanismus, der Kommunikation, speziell Datenaustausch, zwischen Applet-Instanzen ermöglicht, die aus unterschiedlichen Ladepaketen stammen.

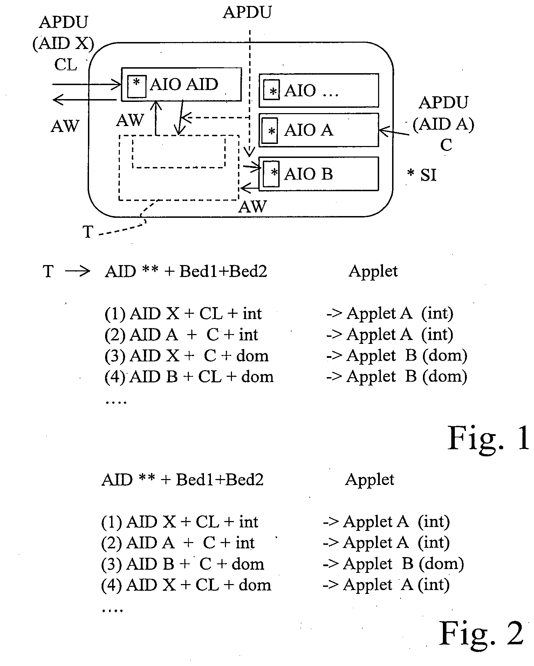

Das Dokument US 8,807,440 B1 offenbart ein Secure Element mit einer Mehrzahl von Zahlungsverkehrs-Applets und einer Kontroll-Software-Applikation (Fig. 2, Element 224), die anhand eines auf bestimmte Weise formatierten AID eines Zahlungsverkehrs-Applets in Kombination mit einer zusätzliche Angabe (z.B. ext1) aus einer bei der Kontroll-Software-Applikation gespeicherten Nutzer-Präferenzliste einen anders formatierten AID des Zahlungsverkehrs-Applets ermitteln kann und nachfolgend einen Aufruf des Zahlungsverkehrs-Applets erwirken kann. Ein AID der Kontroll-Software-Applikation spielt bei dieser Lösung keine Rolle.

Das Dokument US 2015/127529 A1 aus dem Stand der Technik offenbart ein Card Device mit einer Mehrzahl von Applikationen 140, denen Applikations-Identifier zugeordnet sind, und einem Applikations-Linker 130, welcher Kommandos mittels einer Routingtabelle und anhand der Applikations-Identifier zu einer geeigneten Applikationen leitet.

Bei einer Zahlungsverkehrskarte, die mehrere Zahlungsverkehrs-Applets beherbergt, und die in mehreren Ländern einsetzbar sein soll und/oder die mehrere Zugangsmöglichkeiten (insbesondere kontaktlos/kontaktbehaftet) unterstützt, muss für jede Konstellation von z.B. Applet, Land und Zugangsmöglichkeit eine eigene Applet-Instanz angelegt werden und ein eigener Applet AID vorgesehen werden.

Beispiele: Instanz 1 (A-1) Applet A in Land X kontaktbehaftet; Instanz 2 (A-2) Applet A in Land Y kontaktbehaftet; Instanz 3 (B-1) Applet B in Land X kontaktbehaftet; Instanz 4 (B-2) Applet B in Land Y kontaktbehaftet; Instanz 5 (A-3) Applet A in Land X kontaktlos; Instanz 6 (A-4) Applet A in Land Y kontaktlos; etc. Die Vielzahl von 6 Applet-Instanzen benötigt viel Speicher.

Funktionell sind dagegen alle vier (zwei) Applet-Instanzen, die auf demselben Applet A (B) basieren, weitgehend identisch. Unterschiedlich sind lediglich die Bedingungen, unter denen das Card Device adressiert wird, in den obigen Beispielen Kontaktierungsart kontaktlos oder kontaktbehaftet, und Land des Betriebs.

In der Patentanmeldung DE 102016007189.3 des Anmelders der vorliegenden Patentanmeldung ist ein Mechanismus angegeben, mit dem zwei AIDs für ein und dieselbe Applet-Instanz angelegt werden können.

### Aufgabe der Erfindung

Der Erfindung liegt die Aufgabe zu Grunde, ein Card Device zu schaffen, das eine speichersparende Installation von Applets ermöglicht, die unter unterschiedlichen Bedingungen verwendet werden können. Weiter soll ein Verfahren zur Weitergabe von Kommandos an Applet-Instanzen in einem solchen ressourcenbeschränkten Card Device angegeben werden. Insbesondere soll das Card Device bzw. Verfahren einen Mechanismus bieten, unter unterschiedlichen Bedingungen eingehende Kommandos an dasselbe Applet weiterzugeben, ohne dass mehrere Instanzen des Applets im Card Device angelegt werden müssen.

### Zusammenfassung der Erfindung

Die Aufgabe wird gelöst durch ein Card Device nach Anspruch 1 und ein Verfahren gemäß dem nebengeordneten Anspruch. Vorteilhafte Ausgestaltungen der Erfindung sind in den abhängigen Ansprüchen angegeben.

Das erfindungsgemäße Card Device nach Anspruch 1 umfasst, in einem nicht-flüchtigen Speicherbereich eine Applet Instanz eines oder mehrerer funktionelle Applets, z.B. Bezahlapplets (Zahlungsverkehrsapplets) oder Mobilfunk-Netzzugriffs-Applets, und zu jeder installierten Applet Instanz einen der Applet Instanz zugeordneten Applet Identifier AID (z.B. wie üblich in der Registry).

Gemäß der Erfindung umfasst das Card Device weiter eine AID Applet Instanz eines speziellen AID Applets, das selbst kein funktionelles Applet (Bezahlapplet etc.) ist, sondern eingerichtet ist, beim Card Device eingehende Kommandos (z.B. APDUs) abzuarbeiten und an Instanzen funktioneller Applets weiterzuleiten. Der AID Applet Instanz ist ein eigener AID Applet Identifier AID zugeordnet und im Card Device abgelegt, z.B. in der Registry des Card Device, bei den übrigen AIDs der gewöhnlichen, funktionalen Applets. Weiter enthält das Card Device eine Weitergabetabelle, die im AID Applet selbst angelegt ist, oder so angelegt, dass sie durch das AID Applet nutzbar ist. Durch die Weitergabetabelle sind (1) der AID des AID Applets plus Bedingungen von Kommandos, die beim Card Device eingehen, und (2) im Card Device installierte Applets einander zugeordnet. Geht ein Kommando beim Card Device ein und wird vom JavaCard OS an das AID Applet übergeben, so nimmt das AID Applet (bzw. dessen Instanz im Card Device) das Kommando entgegen, wertet die Weitergabetabelle aus und leitet das Kommando an das richtige/jeweilige funktionale Applet weiter, das gemäß der in der Weitergabetabelle hinterlegten Bedingungen verwendet werden soll. Damit die Weitergabe von Kommandos zwischen den Applets durchgeführt werden kann, haben sowohl die AID Applet Instanz als auch die Instanzen der funktionalen Applets jeweils eine aufeinander abgestimmte Schnittstelleneinheit, z.B. ein Shareable Interface Object, um ein Shareable Interface zwischen den verschiedenen Applets einzurichten.

Auf diese Weise ist es möglich, mit einem Kommando (z.B. APDU) eine bestimmte Applet Instanz eines funktionalen Applets im Card Device auf zwei unterschiedliche Weisen zu adressieren. Wahlweise kann die Applet Instanz entweder mit dem eigenen Applet Identifier adressiert werden. Alternativ kann dieselbe Applet Instanz mit dem Applet Identifier des AID Applets adressiert werden, zuzüglich der passenden Bedingungen, damit das Kommando an diese Applet Instanz weitergegeben wird. Hinter beiden Weitergabemöglichkeiten steht nur eine einzige Instanz des funktionalen Applets. Zwar muss für die Instanz des AID Applets und die Weitergabetabelle auch Platz vorgesehen werden. Jedoch können mit einer einzigen Instanz des AID Applets und der Weitergabetabelle eine Vielzahl von zusätzlichen Instanzen funktionaler Applets vermieden werden.

Über eine Rückgabe-Funktionalität, z.B. Rückgabe-Methode, der Schnittstelleneinheit können wahlweise Antwort-Daten in Antwort auf ein Kommando vom funktionalen Applet an das AID Applet zurückgegeben werden.

Als Bedingung können vorgesehen sein: Kontaktierungsart, insbesondere kontaktlos oder kontaktbehaftet, zwischen dem Card Device und einem zum Betrieb des Card Device eingerichteten Terminal; Land des Betriebs des Card Device; Landesbeziehung Inland oder Ausland zwischen einem Land des Betriebs des Card Device und einem Heimatland des Card Device, in dem das Card Device registriert ist; oder andere geeignete Bedingungen.

Das Card Device ist wahlweise in Java Card Technologie oder in Native Code Technologie gestaltet.

Wahlweise bleibt die übliche direkte Art der Weitergabe von Kommandos, mit dem spezifischen AID des adressierten Applet (z.B. AID A für Applet A), vom erfindungsgemäßen Weitergabe-Mechanismus über das AID-Applet und die Weitergabetabelle unberührt erhalten.

Wahlweise enthält das Card Device, jeweils eine Applet Instanz eines internationalen Applets für internationalen Betrieb des Card Device außerhalb eines Heimatlands und/oder eine Applet Instanz eines Heimat Applets für heimatlichen (domestic) Betrieb des Card Device im Heimatland, in dem das Card Device registriert ist.

### Kurze Beschreibung der Zeichnungen

Im Folgenden wird die Erfindung an Hand von Ausführungsbeispielen und unter Bezugnahme auf die Zeichnung näher erläutert, in der zeigt:
- Fig. 1: ein Card Device, das als Zahlungsverkehrskarte mit mehreren Bezahlungs-Applets eingerichtet ist, gemäß Ausführungsformen der Erfindung;
- Fig. 2: eine Variation des Card Device aus Fig. 2, gemäß Ausführungsformen der Erfindung.

### Detaillierte Beschreibung von Ausführungsbeispielen

Fig. 1 zeigt ein Card Device gemäß einer Ausführungsform der Erfindung, das als Zahlungsverkehrskarte mit mehreren Bezahlungs-Applets A, B, ... eingerichtet ist. Das Card Device umfasst zwei unterschiedliche funktionale Applets A und B, im Card Device vertreten durch Applet Instanzen (Applet Instance Objekte) AIOA und AIO B. Die beiden funktionalen Applets A und B sind Zahlungsverkehr Applets, die eingerichtet sind, eine elektronische Bezahltransaktion durchzuführen. Applet A ist generell für internationale Bezahltransaktionen eingerichtet (int). Applet B ist generell für Bezahltransaktionen im Heimatland (domestic Bezahltransaktionen) eingerichtet (dom). Das Card Device enthält weiter ein AID Applet AIO AID und eine Weitergabetabelle T. Die Weitergabetabelle T enthält eine Mehrzahl von Zeilen-Einträgen mit Spalten AID, Bedingungen (Bed1, Bed2), Applet. Das AID Applet enthält weiter eine Schnittstelleneinheit SI, hier gestaltet als Shareable Interface Object gemäß dem Global Platform Standard. Die Applet Instanzen derjenigen funktionalen Applets A, B, ..., die mit dem AID Applet kommunizieren können müssen, enthalten ebenfalls eine Schnittstelleneinheit SI, gestaltet als Shareable Interface Object gemäß dem Global Platform Standard.

Im Folgenden wird die Verarbeitung eines APDU Kommandos im Card Device betrachtet, durch welches APDU Kommando eine Bezahltransaktion durchgeführt wird.

Ein beim Card Device aus Fig. 1 eingehendes APDU Kommando, das einen Applet Identifier AID für das funktionale Applet A enthält, AID A, wird direkt an die Applet Instanz AIO A des Applet A geleitet. APDU Kommando mit AID B werden in analoger Weise direkt an die Instanz AIO B des Applet B geleitet.

Ein beim Card Device aus Fig. 1 eingehendes APDU Kommando, das einen Applet Identifier AID für das AID Applet enthält, AID X, wird an die Applet Instanz AIO AID des AID Applet geleitet, also zunächst an kein funktionales Bezahltransaktion Applet. Das in Fig. 1 gezeigte APDU Kommando mit AID X geht über die kontaktlose Schnittstelle des Card Device ein. Dieses Merkmal entspricht einer Bedingung Bed1 "kontaktlos" CL in der Weitergabetabelle T. Weiter wird das Card Device gerade im internationalen Raum int genutzt. Dies entspricht in der Weitergabetabelle T der Bedingung Bed2 int. Die Weitergabetabelle T besagt, dass APDU Kommandos mit AID X und der Bedingung kontaktlos CL und internationaler Raum an die Applet Instanz AIO A des Applet A geleitet werden. Entsprechend wird das APDU Kommando über das Shareable Interface zwischen der AID Applet Instanz AIO AID und der Applet Instanz A an AIO A an die Applet Instanz AIO A des Applet A geleitet. Eine etwaige Antwort AW der Applet Instanz AIO A wird über das Shareable Interface zurück an die AID Applet Instanz AIO AID geleitet und an die kontaktlose Schnittstelle CL des Card Device bereitgestellt.

Geht ein APDU Kommando kontaktlos im internationalen Raum beim Card Device ein, wird also das internationale Applet A verwendet. Somit werden kontaktlose CL Bezahltransaktionen im internationalen Raum durch das internationale Applet A durchgeführt. Gemäß den weiteren Zeilen der Weitergabetabelle T (Zeile 2) werden internationale (int) kontaktbehaftete C Bezahltransaktionen durch das internationale Applet A bearbeitet. (Zeile 3) Im Heimatland (dom) kontaktbehaftet C durchgeführte Bezahltransaktionen werden durch das Heimatland Applet B durchgeführt. (Zeile 4) Im Heimatland (dom) kontaktlos durchgeführte Bezahltransaktionen werden durch das Heimatland Applet B durchgeführt.

Gemäß Fig. 1 werden alle internationalen Bezahltransaktionen mit Applet A durchgeführt, und alle Bezahltransaktionen im Heimatland (domestic) mit Applet B, unabhängig von der Kontaktierungsart, kontaktlos oder kontaktbehaftet. Dies wäre auch möglich, ohne die Kontaktierungsart als Bedingung auszuwerten. Jedoch ermöglicht das anhand von Fig. 1 dargestellte Weitergabesystem auch andere, individuellere Weitergabemodelle, wie nachfolgend anhand von Fig. 2 dargelegt wird.

Fig. 2 zeigt eine Variation des Card Device aus Fig. 2, gemäß Ausführungsformen der Erfindung. In Fig. 2 unterscheiden sich die beiden unteren Zeilen der Weitergabetabelle T von der Weitergabetabelle T aus Fig. 1, die beiden oberen Zeilen sind gleich.

Die Zielsetzung der Ausführungsformen aus Fig. 2 ist, dass im Heimatland dom nur kontaktbehaftete C Bezahltransaktionen durch das Heimatland Applet B bearbeitet werden sollen. Im Heimatland dom kontaktlos CL durchgeführte Bezahltransaktionen sollen dagegen durch das internationale Applet A bearbeitet werden. Im internationalen Raum int durchgeführte Bezahltransaktionen sollen dagegen unabhängig von der Kontaktierungsart, kontaktlos CL, oder kontaktbehaftet C, stets mit dem internationalen Applet A durchgeführt werden.

Gemäß Fig. 2, Zeile drei, wird ein kontaktbehaftet C im Heimatland dom eingehendes APDU Kommando, das AID B enthält, direkt an die Applet Instanz AIO B des Heimatland Applet B geleitet. Somit wird die kontaktbehaftete Bezahltransaktion im Heimatland mit dem Heimatland Applet B durchgeführt.

Gemäß Fig. 2, Zeile vier, wird ein kontaktlos CL eingehendes APDU Kommando, das AID X enthält, an die Applet Instanz AIO AID des AID Applet geleitet, und durch dieses an die Applet Instanz AIO A des internationalen Applet A geleitet. So wird der Effekt erreicht, dass kontaktlose Bezahlungen stets mit dem internationalen Applet A durchgeführt werden. Herkömmlicherweise müsste, um diesen Effekt zu erzielen, eine zusätzliche Applet Instanz von Applet A im Card Device installiert werden.

Gemäß alternativen Ausführungsformen der Erfindung werden beispielsweise kontaktbehaftete Bezahltransaktionen im internationalen Raum, die normalerweise durch das internationale Applet A durchgeführt würden, mittels eines AID X und einem Eintrag AID X + C + int -> Applet B in der Weitergabetabelle T an das Heimatland Applet B umgeleitet. Somit werden kontaktbehaftete C Bezahltransaktionen stets mit dem Heimatland Applet B durchgeführt, selbst wenn sie im internationalen Raum stattfinden. Hierfür darf die Weitergabetabelle T dann natürlich nicht den in Fig. 2 dargestellten Eintrag von Zeile 2 enthalten. Den dieser Eintrag AID A + C + int -> Applet A bewirkt eine zwingende direkte Leitung von kontaktbehafteten C Bezahltransaktionen im internationalen Raum an das internationale Applet A.

Vorteilhaft ist daher, wenn die Einträge in der Weitergabetabelle T aufeinander abgestimmt sind, gemäß einer gewünschten Zielsetzung.

### Zitierter Stand der Technik

[1] [GPC_SPE_034] Global Card Platform Specification V2.2.1, 2011
[2] US 8,807,440 B1
[3] DE 102016007189.3

## Patentansprüche

1. Card Device, umfassend einen nicht-flüchtigen Speicherbereich, wobei im nichtflüchtigen Speicherbereich installiert sind:
- mindestens eine Applet Instanz (AIO A; AIO B) mindestens eines funktionalen Applets (A; B);
- zu jeder installierten Applet Instanz (AIO A; AIO B) einen der Applet Instanz (AIO A; AIO B) zugeordneten Applet Identifier AID (AID A; AID B);
- eine AID Applet Instanz (AIO AID) eines AID Applets, umfassend eine Schnittstelleneinheit zur Kommunikation mit funktionalen Applets (A; B);
- in jedem installierten funktionalen Applet (A; B), das mit dem AID Applet kommunizieren können soll, eine Schnittstelleneinheit zum AID Applet (AIO AID);
- einen der AID Applet Instanz (AIO AID) zugeordneten AID Applet Identifier AID (AID X); und
- eine Weitergabetabelle (T), mittels der einander zugeordnet sind:
--- eine oder mehrere Kombinationen des AID Applet Identifiers AID (AID X) mit einer oder mehreren Bedingungen (Bed1, Bed2) von beim Card Device eingehenden Kommandos (APDU); und
--- zu jeder Kombination: eine Bezeichnung eines funktionalen Applets (A; B) bzw. einer installierten Applet Instanz (AIO A; AIO B), an das/die bei Vorliegen dieser Kombination ein Kommando (APDU) der eingehenden Kommandos (APDU) weiterzuleiten ist;
--- **dadurch gekennzeichnet, dass** das Card Device so ausgestaltet ist, dass es erlaubt, eine Applet Instanz (AIO A; AIO B) eines funktionalen Applets (A; B) auf zwei unterschiedliche Weisen mit einem Kommando (APDU) zu addressieren, nämlich entweder mit dem eignen Applet Identifier AID (AID A; AID B) oder mit dem AID Applet Identifier AID (AID X) zuzüglich der passenden Bedingungen (Bed 1, Bed 2).

2. Card Device nach Anspruch 1, wobei die Schnittstelleneinheit ein Shareable Interface (SI) der Applet Instanz (AIO A; AIO B) umfasst, und das Weiterleiten gemäß den Bedingungen in der Weitergabetabelle (T) an die Applet Instanz (AIO A; AIO B) gemäß dem Shareable Interface Mechanismus erfolgt.

3. Card Device nach Anspruch 1 oder 2, wobei die Schnittstelleneinheit eine Rückgabe-Funktionalität, insbesondere eine Rückgabe-Methode, umfasst, die eingerichtet ist, als Antwort auf ein von der AID Applet Instanz (AIO AID) weitergegebenes Kommando (APDU) Antwort-Daten (AW) über die Schnittstelleneinheit von der Applet Instanz (AIO A; AIO B) an die AID Applet Instanz (AIO AID) zu übertragen.

4. Card Device nach einem der Ansprüche 1 bis 3, wobei als Bedingung eine oder eine Kombination mehrerer der folgenden vorgesehen ist:
- Kontaktierungsart, insbesondere kontaktlos (CL) oder kontaktbehaftet (C), zwischen dem Card Device und einem zum Betrieb des Card Device eingerichteten Terminal;
- Land des Betriebs des Card Device;
- Landesbeziehung Inland oder Ausland zwischen einem Land des Betriebs des Card Device und einem Heimatland des Card Device, in dem das Card Device registriert ist.

5. Card Device nach einem der Ansprüche 1 bis 4, wobei das Card Device in Java Card Technologie oder in Native Code Technologie gestaltet ist.

6. Card Device nach einem der Ansprüche 1 bis 5, wobei jede installierte Applet Instanz (AIO A; AIO B) zusätzlich eingerichtet ist, Kommandos (APDU), die den Applet Identifier AID (AID A; AID B) enthalten, direkt zu empfangen, insbesondere ohne Weitergabe durch die AID Applet Instanz (AIO AID).

7. Card Device nach einem der Ansprüche 1 bis 6, wobei:
- eine Applet Instanz (AIO A) eines ersten Applet (A) für internationalen Betrieb des Card Device außerhalb eines Heimatlands, in dem das Card Device registriert ist, vorgesehen ist; und/oder
- eine Applet Instanz (AIO B) eines zweiten Applet (B) für heimatlichen (domestic) Betrieb des Card Device im Heimatland, in dem das Card Device registriert ist, vorgesehen ist.

8. Verfahren, in einem Card Device, zur Weitergabe eines Kommandos, das von außerhalb des Card Devices beim Card Device eingeht; das Card Device umfassend einen nicht-flüchtigen Speicherbereich, wobei im nichtflüchtigen Speicherbereich installiert sind:
- mindestens eine Applet Instanz (AIO A; AIO B) mindestens eines funktionalen Applets (A; B);
- zu jeder installierten Applet Instanz (AIO A; AIO B) einen der Applet Instanz (AIO A; AIO B) zugeordneten Applet Identifier AID (AID A; AID B);
- eine AID Applet Instanz (AIO AID) eines AID Applets, umfassend eine Schnittstelleneinheit zur Kommunikation mit funktionalen Applets (A; B);
- in jedem installierten funktionalen Applet (A; B), das mit dem AID Applet kommunizieren können soll, eine Schnittstelleneinheit zum AID Applet (AIO AID);
- einen der AID Applet Instanz (AIO AID) zugeordneten AID Applet Identifier AID (AID X); und
- eine Weitergabetabelle (T), mittels der einander zugeordnet sind:
--- eine oder mehrere Kombinationen des AID Applet Identifiers AID (AID X) mit einer oder mehreren Bedingungen (Bed1, Bed2) von beim Card Device eingehenden Kommandos (APDU); und
--- zu jeder Kombination: eine Bezeichnung eines funktionalen Applets (A; B) bzw. einer installierten Applet Instanz (AIO A; AIO B), an das/die bei Vorliegen dieser Kombination ein Kommando (APDU) der eingehenden Kommandos (APDU) weiterzuleiten ist,
- Empfangen eines Kommandos (APDU), das einen AID Applet Identifier AID (AID X) des AID Applets (AIO AID) umfasst, unter einer oder mehreren Bedingungen (Bed1, Bed2), wobei der AID Applet Identifier AID (AID X) und die eine oder mehreren Bedingungen einem Eintrag in der Weitergabetabelle (T) entsprechen; und
- Weiterleiten des Kommandos (APDU) an eine Applet Instanz (AIO A; AIO B) gemäß dem Eintrag in der Weitergabetabelle (T) ; ------ **dadurch gekennzeichnet, dass** das Card Device so ausgestaltet ist, dass es erlaubt, eine Applet Instanz (AIO A; AIO B) eines funktionalen Applets (A; B) auf zwei unterschiedliche Weisen mit einem Kommando (APDU) zu adressieren, nämlich entweder mit dem eignen Applet Identifier AID (AID A; AID B) oder mit dem AID Applet Identifier AID (AID X) zuzüglich der passenden Bedingungen (Bed 1, Bed 2).

9. Verfahren nach Anspruch 8, wobei die Schnittstelleneinheit eine Rückgabe-Funktionalität, insbesondere eine Rückgabe-Methode, umfasst, die als Antwort auf ein von der AID Applet Instanz (AIO AID) weitergegebenes Kommando (APDU) Antwort-Daten (AW) über die Schnittstelleneinheit von der Applet Instanz (AIO A; AIO B) an die AID Applet Instanz (AIO AID) überträgt.

## Claims

1. Card device, comprising a non-volatile memory area, wherein the following are installed in the non-volatile memory area:
- at least one applet instance (AIO A; AIO B) of at least one functional applet (A; B);
- for each installed applet instance (AIO A; AIO B), an applet identifier AID (AID A; AID B) assigned to the applet instance (AIO A; AIO B);
- an AID applet instance (AIO AID) of an AID applet, comprising an interface unit for communication with functional applets (A; B);
- in each installed functional applet (A; B) which is intended to be able to communicate with the AID applet, an interface unit to the AID applet (AIO AID) ;
- an AID applet identifier AID (AID X) assigned to the AID applet instance (AIO AID); and
- a gamma (T), by means of which the following are assigned to one another:
--- one or more combinations of the AID applet identifier AID (AID X) with one or more conditions (Bed1, Bed2) of commands (APDU) arriving at the card device; and
--- for each combination: a designation of a functional applet (A; B) and/or of an installed applet instance (AIO A; AIO B) to which a command (APDU) of the arriving commands (APDU) is to be forwarded if this combination is present;
--- **characterized in that** the card device is configured such that it allows an applet instance (AIO A; AIO B) of a functional applet (A; B) to be addressed with a command (APDU) in two different ways, namely either with the dedicated applet identifier AID (AID A; AID B) or with the AID applet identifier AID (AID X) plus the appropriate conditions (Bed 1, Bed 2).

2. Card device according to Claim 1, wherein the interface unit comprises a shareable interface (SI) of the applet instance (AIO A; AIO B), and the forwarding in accordance with the conditions in the gamma (T) to the applet instance (AIO A; AIO B) is effected in accordance with the shareable interface mechanism.

3. Card device according to Claim 1 or 2, wherein the interface unit comprising a return functionality, in particular a return method, which is designed, as a response to a command (APDU) relayed by the AID applet instance (AIO AID), to transmit response data (AW) from the applet instance (AIO A; AIO B) to the AID applet instance (AIO AID) via the interface unit.

4. Card device according to any of Claims 1 to 3, wherein one or a combination of a plurality of the following is provided as condition:
- contacting type, in particular contactless (CL) or with contacts (C), between the card device and a terminal designed for operation of the card device;
- country of operation of the card device;
- country relationship, domestic or abroad, between a country of operation of the card device and a home country of the card device, in which the card device is registered.

5. Card device according to any of Claims 1 to 4, wherein the card device is configured using Java Card technology or using native code technology.

6. Card device according to any of Claims 1 to 5, wherein each installed applet instance (AIO A; AIO B) is additionally designed to directly receive commands (APDU) containing the applet identifier AID (AID A; AID B), in particular without relaying by the AID applet instance (AIO AID).

7. Card device according to any of Claims 1 to 6, wherein:
- an applet instance (AIO A) of a first applet (A) is provided for international operation of the card device outside a home country in which the card device is registered; and/or
- an applet instance (AIO B) of a second applet (B) is provided for domestic operation of the card device in the home country in which the card device is registered.

8. Method, in a card device, for relaying a command arriving at the card device from outside the card device; the card device comprising a non-volatile memory area, wherein the following are installed in the non-volatile memory area:
- at least one applet instance (AIO A; AIO B) of at least one functional applet (A; B);
- for each installed applet instance (AIO A; AIO B), an applet identifier AID (AID A; AID B) assigned to the applet instance (AIO A; AIO B);
- an AID applet instance (AIO AID) of an AID applet, comprising an interface unit for communication with functional applets (A; B);
- in each installed functional applet (A; B) which is intended to be able to communicate with the AID applet, an interface unit to the AID applet (AIO AID) ;
- an AID applet identifier AID (AID X) assigned to the AID applet instance (AIO AID); and
- a gamma (T), by means of which the following are assigned to one another:
--- one or more combinations of the AID applet identifier AID (AID X) with one or more conditions (Bed1, Bed2) of commands (APDU) arriving at the card device; and
--- for each combination: a designation of a functional applet (A; B) and/or of an installed applet instance (AIO A; AIO B) to which a command (APDU) of the arriving commands (APDU) is to be forwarded if this combination is present,
- receiving a command (APDU) comprising an AID applet identifier AID (AID X) of the AID applet (AIO AID), under one or more conditions (Bed1, Bed2), wherein the AID applet identifier AID (AID X) and the one or more conditions correspond to an entry in the gamma (T); and
- forwarding the command (APDU) to an applet instance (AIO A; AIO B) in accordance with the entry in the gamma (T);
--- **characterized in that** the card device is configured such that it allows
an applet instance (AIO A; AIO B) of a functional applet (A; B) to be addressed with a command (APDU) in two different ways, namely either with the dedicated applet identifier AID (AID A; AID B) or with the AID applet identifier AID (AID X) plus the appropriate conditions (Bed 1, Bed 2).

9. Method according to Claim 8, wherein the interface unit comprising a return functionality, in particular a return method, which, as a response to a command (APDU) relayed by the AID applet instance (AIO AID), transmits response data (AW) from the applet instance (AIO A; AIO B) to the AID applet instance (AIO AID) via the interface unit.

## Revendications

1. Dispositif à carte, comprenant une zone de mémoire non volatile, zone de mémoire non volatile dans laquelle sont installés :
- au moins une instance d'applet (AIO A ; AIO B) d'au moins une applet fonctionnelle (A ; B) ;
- pour chaque instance d'applet installée (AIO A ; AIO B), un identifiant d'applet AID (AID A ; AID B) associé à l'instance d'applet (AIO A ; AIO B) ;
- une instance d'applet AID (AIO AID) d'une applet AID, comprenant une unité d'interface destinée à la communication avec des applets fonctionnelles (A ; B) ;
- dans chaque applet fonctionnelle installée (A ; B) qui doit pouvoir communiquer avec l'applet AID, une unité d'interface avec l'applet AID (AIO AID) ;
- un identifiant AID (AID X) d'applet AID associé à l'instance d'applet AID (AIO AID) ; et
- une table de transfert (T) permettant d'associer entre eux :
-- une ou plusieurs combinaisons de l'identifiant AID (AID X) d'applet AID à une ou plusieurs conditions (Bed1, Bed2) de commandes (APDU) entrant dans le dispositif à carte ; et
-- pour chaque combinaison : une désignation d'une applet fonctionnelle (A ; B) ou d'une instance d'applet installée (AIO A ; AIO B) à laquelle une commande (APDU) des commandes entrantes (APDU) doit être transmise si cette combinaison est présente ; -- **caractérisé en ce que** le dispositif à carte est conçu de manière à permettre l'adressage d'une instance d'applet (AIO A ; AIO B) d'une applet fonctionnelle (A ; B) de deux manières différentes avec une seule commande (APDU),
à savoir soit avec le propre identifiant d'applet AID (AID A; AID B) soit avec l'identifiant AID (AID X) d'applet AID en plus des conditions appropriées (Bed 1, Bed 2).

2. Dispositif à carte selon la revendication 1, l'unité d'interface comprenant une interface partageable (SI) de l'instance d'applet (AIO A ; AIO B) et le transfert selon les conditions de la table de transfert (T) vers l'instance d'applet (AIO A ; AIO B) étant effectué selon le mécanisme d'interface partageable.

3. Dispositif à carte selon la revendication 1 ou 2, l'unité d'interface comprenant une fonctionnalité de retour, notamment une méthode de retour, qui est conçue pour transmettre, en réponse à une commande (APDU) transmise par l'instance d'applet AID (AIO AID), des données de réponse (AW) par le biais de l'unité d'interface de l'instance d'applet (AIO A ; AIO B) à l'instance d'applet AID (AIO AID).

4. Dispositif à carte selon l'une des revendications 1 à 3, un élément suivant ou une combinaison de plusieurs éléments suivants étant prévu(e) comme condition :
- le type de contact, notamment sans contact (CL) ou avec contact (C), entre le dispositif à carte et un terminal conçu pour faire fonctionner le dispositif à carte ;
- le pays dans lequel le dispositif à carte fonctionne ;
- la relation entre pays, territoire national ou territoire étranger, entre un pays dans lequel le dispositif à carte fonctionne et un pays d'origine du dispositif à carte dans lequel le dispositif à carte est enregistré.

5. Dispositif à carte selon l'une des revendications 1 à 4, le dispositif à carte étant conçu en technologie Java Card ou en technologie à code natif.

6. Dispositif à carte selon l'une des revendications 1 à 5, chaque instance d'applet installée (AIO A ; AIO B) étant en outre conçue pour recevoir directement, en particulier sans transfert par l'instance d'applet AID (AIO AID), des commandes (APDU) qui contiennent l'identifiant d'applet AID (AID A ; AID B).

7. Dispositif à carte selon l'une des revendications 1 à 6 :
- une instance d'applet (AIO A) d'une première applet (A) étant fournie pour un fonctionnement international du dispositif à carte en dehors d'un pays d'origine dans lequel le dispositif à carte est enregistré ; et/ou
- une instance d'applet (AIO B) d'une deuxième applet (B) étant prévue pour le fonctionnement d'origine du dispositif à carte dans le pays d'origine dans lequel le dispositif à carte est enregistré.

8. Procédé, dans un dispositif à carte, de transfert d'une commande entrant dans le dispositif à carte depuis l'extérieur du dispositif à carte ; le dispositif à carte comprenant une zone de mémoire non volatile, zone de mémoire non volatile dans laquelle sont installés :
- au moins une instance d'applet (AIO A ; AIO B) d'au moins une applet fonctionnelle (A ; B) ;
- pour chaque instance d'applet installée (AIO A ; AIO B), un identifiant d'applet AID (AID A ; AID B) associé à l'instance d'applet (AIO A ; AIO B) ;
- une instance d'applet AID (AIO AID) d'une applet AID, comprenant une unité d'interface destinée à la communication avec des applets fonctionnelles (A ; B) ;
- dans chaque applet fonctionnelle installée (A ; B) qui doit pouvoir communiquer avec l'applet AID, une unité d'interface avec l'applet AID (AIO AID) ;
- un identifiant AID (AID X) d'applet AID associé à l'instance d'applet AID (AIO AID) ; et
- une table de transfert (T) permettant d'associer entre eux :
--- une ou plusieurs combinaisons de l'identifiant AID (AID X) d'applet AID à une ou plusieurs conditions (Bed1, Bed2) de commandes (APDU) entrant dans le dispositif à carte ; et
--- pour chaque combinaison : une désignation d'une applet fonctionnelle (A ; B) ou d'une instance d'applet installée (AIO A ; AIO B) à laquelle une commande (APDU) des commandes entrantes (APDU) doit être transmise si cette combinaison est présente ;
- réception d'une commande (APDU) comprenant un identifiant AID (AID X) de l'applet AID (AIO AID), dans une ou plusieurs conditions (Bed1, Bed2) dans lesquelles l'identifiant AID (AID X) d'applet AID et les une ou plusieurs conditions correspondent à une entrée dans la table de transfert (T) ; et
- transfert de la commande (APDU) à une instance d'applet (AIO A ; AIO B) selon l'entrée dans la table de transfert (T) ;
---- **caractérisé en ce que** le dispositif à carte est conçu de manière à permettre l'adressage d'une instance d'applet (AIO A ; AIO B) d'une applet fonctionnelle (A ; B) de deux manières différentes avec une seule commande (APDU),
à savoir soit avec le propre identifiant d'applet AID (AID A; AID B) soit avec l'identifiant AID (AID X) d'applet AID en plus des conditions appropriées (Bed 1, Bed 2).

9. Procédé selon la revendication 8, l'unité d'interface comprenant une fonctionnalité de retour, notamment une méthode de retour, qui transmet, en réponse à une commande (APDU) transférée par l'instance d'applet AID (AIO AID), des données de réponse (AW) par le biais de l'unité d'interface de l'instance d'applet (AIO A ; AIO B) à l'instance d'applet AID (AIO AID).
